(19) Europäisches Patentamt
European Patent Office
Office européen des brevets

(11) **EP 4 787 350 A1**

(12) **EUROPEAN PATENT APPLICATION**
published in accordance with Art. 153(4) EPC

(43) Date of publication:
**05.08.2026 Bulletin 2026/32**

(21) Application number: **24870502.2**

(22) Date of filing: **14.09.2024**

(51) International Patent Classification (IPC):
**G08B 21/18** (2006.01)

(52) Cooperative Patent Classification (CPC):
**G01D 21/02; G08B 21/18**

(86) International application number:
**PCT/CN2024/119131**

(87) International publication number:
**WO 2025/066958 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311282879**

(71) Applicant: **Zephyr Intelligent System (Shanghai)
Co., Ltd.
Shanghai 201206 (CN)**

(72) Inventors:
• **REN, Siyuan
Shanghai 201206 (CN)**
• **LI, Fei
Shanghai 201206 (CN)**

(74) Representative: **De Arpe Tejero, Manuel
Paseo de la Castellana 93b
28046 Madrid (ES)**

(54) **ALARM LEVEL DETERMINATION METHOD AND APPARATUS, AND ELECTRONIC DEVICE AND STORAGE MEDIUM**

(57)     An alarm level determination method, a device, an electronic device, and a storage medium are provided. Wherein the alarm level determination method comprises: acquiring current environmental data collected by a plurality of preset sensors (S110); determining an alarm condition to which the current environmental data corresponding to each of the plurality of preset sensors belongs based on respective identification information of the plurality of preset sensors (S120); determining the alarm condition as a target alarm condition when a current environmental data satisfies a sub-alarm rule of the corresponding alarm condition (S130); and determining the alarm level to which the target alarm condition belongs as a target alarm level, wherein the alarm level comprises at least one alarm condition (S140).

FIG. 1

**Description**

**CROSS-REFERENCE TO RELATED APPLICATIONS**

This application claims the priority of a Chinese patent application filed with the China National Intellectual Property Administration on September 28, 2023, with Application No. 202311282879.9, and the entire content of the above application is incorporated herein by reference.

**TECHNICAL FIELD**

This application relates to the technical field of fire alarms, for example, to a method for determining an alarm level, a device, an electronic device, and a storage medium.

**BACKGROUND**

Lithium battery boxes are used for energy storage and a high fire load and significant fire risk. Once a battery undergoes thermal runaway, it is difficult to extinguish, making it particularly prone to causing a systemic fire. Unless detected and extinguished promptly, the battery box will suffer severe damage or even explode, necessitating real-time monitoring of its fire conditions.

In related art, alarm strategies for different lithium battery boxes can be implemented using different sensors for monitoring and alarming. However, the software for monitoring and alarming with different sensors needs to be developed separately, meaning that different scenarios and alarm strategies correspond to different software programs. As non-standard application scenarios become increasingly common, the number of required software programs also grows. Programmers are then required to modify alarm strategies according to non-standard requirements, which increases development and testing cycles and makes code upgrade management inconvenient.

**SUMMARY**

This application provides a method for determining an alarm level, a device, an electronic device, and a storage medium to achieve automatic determination of the alarm level, enabling the system to issue early warnings according to different strategies based on the alarm level.

This application provides a method for determining an alarm level, comprising:

acquiring current environmental data collected by a plurality of preset sensors;
determining an alarm condition to which the current environmental data corresponding to each of the plurality of preset sensors belongs based on respective identification information of the plurality of preset sensors;
determining the alarm condition as a target alarm condition in response to a current environmental data satisfying a sub-alarm rule of the corresponding alarm condition;
and determining the alarm level to which the target alarm condition belongs as a target alarm level, wherein the alarm level comprises at least one alarm condition.

This application further provides a device for determining an alarm level, comprising:

an environmental data determination module configured to acquire current environmental data collected by a plurality of preset sensors;
an alarm condition determination module configured to determine an alarm condition to which the current environmental data corresponding to each of the plurality of preset sensors belongs based on respective identification information of the plurality of preset sensors;
a target alarm condition determination module configured to determine the alarm condition as a target alarm condition in response to a current environmental data satisfying a sub-alarm rule of the corresponding alarm condition;
and an alarm level determination module configured to determine the alarm level to which the target alarm condition belongs as a target alarm level, wherein the alarm level comprises at least one alarm condition.

This application further provides an electronic device, comprising:

at least one processor; and
a memory connected communicatively to the at least one processor; wherein
the memory stores a computer program executable by the at least one processor, and the computer program is executed by the at least one processor to enable the at least one processor to perform the method for determining an alarm level according to any embodiment of this application.

This application further provides a computer-readable storage medium, wherein the computer-readable storage medium stores computer instructions, and the computer instructions are used to enable a processor to implement the method for determining an alarm level according to any embodiment of this application when executed by the processor.

## BRIEF DESCRIPTION OF THE DRAWINGS

The following provides a brief introduction to the drawings required in the description of the embodiments.

FIG. 1 is a flowchart of a method for determining an alarm level provided by an embodiment of this application;
FIG. 2 is a flowchart of another method for determining an alarm level provided by an embodiment of this application;
FIG. 3 is a structural schematic diagram of a device for determining an alarm level provided by an embodiment of this application; and
FIG. 4 is a structural schematic diagram of an electronic device for implementing a method for determining an alarm level according to an embodiment of this application.

## DETAILED DESCRIPTION

The technical solutions in the embodiments of this application will be described below with reference to the drawings in the embodiments of this application. The described embodiments are merely a part of the embodiments of this application, and not all of them. Based on the embodiments in this application, all other embodiments obtained by a person of ordinary skill in the art without making creative efforts shall fall within the protection scope of this application.

The terms "first", "second", etc. in the specification, claims, and the above drawings of this application are used to distinguish similar objects, and are not necessarily used to describe a specific order or sequence. It should be understood that the data used in this way can be interchanged where appropriate, so that the embodiments of this application described herein can be implemented in an order other than those illustrated or described herein. Furthermore, the terms "comprising" and "having" and any variations thereof are intended to cover a non-exclusive inclusion. For example, in addition to a process, method, system, product, or apparatus comprising a series of steps or units shown in the embodiments of this application, it may also include other processes, methods, systems, products, or apparatuses that do not clearly list this series of steps or units, or other steps or units inherent to these processes, methods, systems, products, or apparatuses.

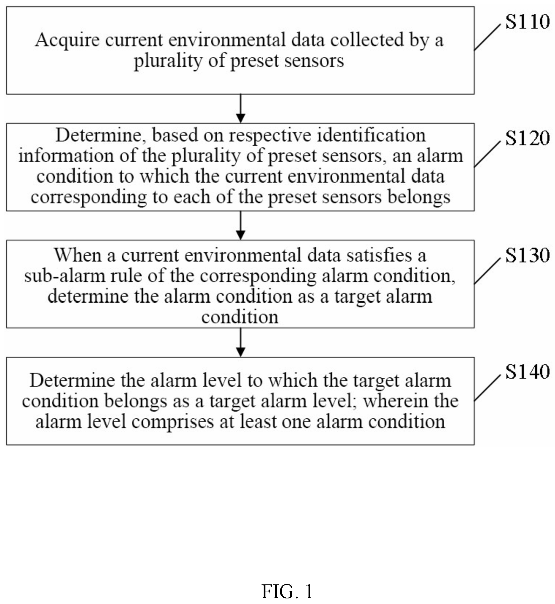

In an embodiment, FIG. 1 is a flowchart of a method for determining an alarm level provided by an embodiment of the present application. This embodiment is applicable to a scenario for determining an alarm level. The method may be executed by an alarm level determination device, which may be implemented in hardware and/or software and may be configured in an electronic device. As shown in FIG. 1, the method comprises the following steps.

S110: current environmental data collected by a plurality of preset sensors is acquired.

Wherein, the current environmental data may refer to fire early warning-related data collected in the current environment. Exemplarily, the current environmental data may include, but is not limited to, carbon monoxide concentration, hydrogen concentration, temperature, smoke concentration, and the like. The types of preset sensors may be multiple, and different preset sensors may be used to collect different types of current environmental data. In an actual operation process, a preset carbon monoxide concentration sensor may be used to collect the carbon monoxide concentration in the environment, a preset hydrogen concentration sensor may be used to collect the hydrogen concentration in the environment, a preset temperature sensor may be used to collect the temperature of the current environment, and a preset smoke concentration sensor may be used to collect the smoke concentration in the environment.

In this embodiment, the current environmental data collected by the plurality of preset sensors may be read. In a practical application, a sampling time interval may be set in advance, and the current environmental data, such as carbon monoxide concentration, hydrogen concentration, temperature, and smoke concentration, collected by the plurality of preset sensors may be acquired according to the sampling time interval.

S120: based on respective identification information of the plurality of preset sensors, an alarm condition, to which the current environmental data corresponding to each of the preset sensors belongs, is determined.

Wherein, the identification information may be used to indicate the identity of each preset sensor. In an actual operation process, the identification information may include a sensor number, a sensor name identifier, and the like. The alarm condition may refer to a condition that satisfies a fire alarm and may be set in advance according to user requirements. The number of alarm conditions may be multiple, and each alarm level may have multiple alarm conditions. When any one of the alarm conditions in an alarm level is satisfied, it may be determined that the alarm level is satisfied.

Exemplarily, an alarm condition may include that the current environmental data corresponding to a preset sensor with identification information of 1 satisfies a first preset condition, and the current environmental data corresponding to a preset sensor with identification information of 2 satisfies a second preset condition.

In this embodiment, a correspondence between the identification information of each preset sensor and an alarm condition may be set in advance, and the alarm condition corresponding to the current environmental data of each preset sensor may be determined through the identification information of each preset sensor. In an actual operation process, a data temporary storage bit may be set in advance for the identification information of each preset sensor, stored as a preset first array, and the alarm condition to which the corresponding current environmental data belongs may be determined according to the identification information of each preset sensor in the preset first array.

S130: when a current environmental data satisfies a sub-alarm rule of the corresponding alarm condition, the alarm condition is determined as a target alarm condition.

Wherein, the sub-alarm rule may be an alarm rule configured for the corresponding current environmental data in each alarm condition. The sub-alarm rule may include a judgment rule and a preset alarm threshold, and each data temporary storage bit corresponds to one sub-alarm rule. That is to say, each alarm condition may correspond to multiple sub-alarm rules. The target alarm condition may refer to an alarm condition that is satisfied by the current environmental data, and may be the alarm condition with the highest corresponding alarm level among the satisfied alarm conditions.

In this embodiment, the sub-alarm rule corresponding to each alarm condition may be extracted, and it may be determined in sequence whether each current environmental data satisfies the sub-alarm rule of the corresponding alarm condition, that is, whether it satisfies the judgment rule and the preset alarm threshold of the sub-alarm rule. When it is determined that all sub-alarm rules in the same alarm condition are satisfied, the alarm condition is determined as the target alarm condition. In an embodiment, when there are at least two alarm conditions for which the sub-alarm rules are both satisfied, the alarm condition with the highest corresponding alarm level among the satisfied alarm conditions may be determined as the target alarm condition.

In an actual operation process, the priorities of a plurality of alarm conditions may be arranged according to the alarm levels, and it may be determined in sequence from the alarm condition corresponding to the highest priority whether the corresponding current environmental data satisfies the sub-alarm rule of the corresponding alarm condition. When there is current environmental data that satisfies the sub-alarm rule of the corresponding alarm condition, the judgment of the next alarm condition is stopped, and this alarm condition is determined as the target alarm condition.

S140: the alarm level, to which the target alarm condition belongs is determined as a target alarm level; wherein the alarm level comprises at least one alarm condition.

Wherein, the alarm level may be set in advance according to the severity of the fire situation. The number of alarm levels may be at least two, and each alarm level has at least one alarm condition. When any one of the alarm conditions in an alarm level is satisfied, it may be determined that the alarm level is satisfied.

In this embodiment, after the target alarm condition is determined, the alarm level to which the target alarm condition belongs may be determined, and the alarm level to which the target alarm condition belongs is taken as the target alarm level. In an actual operation process, it may be determined in sequence whether an alarm level contains the target alarm condition in an order of alarm levels from high to low, and the alarm level in which the target alarm condition exists is taken as the target alarm level.

In the embodiment of the present application, by acquiring current environmental data collected by a plurality of preset sensors, determining an alarm condition to which the current environmental data corresponding to each of the plurality of preset sensors belongs based on respective identification information of the plurality of preset sensors, determining the alarm condition as a target alarm condition when a current environmental data satisfies a sub-alarm rule of the corresponding alarm condition, and determining the alarm level to which the target alarm condition belongs as a target alarm level, automatic determination of the alarm level is achieved, enabling the system to issue early warnings according to different strategies based on the alarm level, reducing false alarms of the system, and allowing a user to discover a fire in a timely manner and extinguish it in time when the alarm level is high, thereby minimizing fire damage.

In an embodiment, before acquiring the current environmental data collected by the plurality of preset sensors, the method further comprises:

determining at least one preset sensor corresponding to each alarm condition according to an alarm requirement, and for each alarm condition, setting a data temporary storage bit in a preset first array corresponding to the alarm condition according to the identification information of each preset sensor;

determining the alarm level corresponding to each alarm condition, storing each alarm level and the corresponding alarm condition in association into a preset second array, and marking different priorities for different alarm conditions corresponding to the same alarm level within the preset second array;

and configuring a judgment rule and a preset alarm threshold corresponding to each data temporary storage bit as a sub-alarm rule.

Wherein, the preset first array can be used to store the data temporary storage bits corresponding to the identification information of the plurality of preset sensors. The identification information of the plurality of preset sensors can be used as an index for the preset first data, and the data temporary storage bit for the current environmental data collected by each preset sensor is determined according to the identification information. The preset second array can be used to store the alarm conditions corresponding to a plurality of alarm levels, and the corresponding alarm level can be determined according to the alarm condition. Within the preset second array, different priorities can be set for different alarm conditions of the same alarm level.

The judgment rule may refer to a method for judging the current environmental data corresponding to a data temporary storage bit. Exemplarily, the judgment rule may include "greater than or equal to" and "less than or equal to". In an actual operation process, an identifier for each judgment rule can be set, and the identifiers of a plurality of judgment rules can be stored in an array in correspondence with the data temporary storage bits, to facilitate the extraction of the judgment rules. The preset alarm threshold may refer to a judgment threshold for the current environmental data corresponding to a data temporary storage bit. The preset alarm threshold can be set according to empirical values or user requirements. The preset alarm threshold can also be stored in an array in correspondence with the data temporary storage bits, to facilitate the extraction of the preset alarm threshold. The corresponding judgment rule and preset alarm threshold can be extracted according to the data temporary storage bit. When the current environmental data satisfies the preset alarm threshold according to the judgment rule, it can be determined that the current environmental data stored in the data temporary storage bit satisfies the sub-alarm rule.

In this embodiment, the preset sensor corresponding to each alarm condition can be determined. For each alarm condition, a data temporary storage bit is set in the preset first array corresponding to the alarm condition according to the identification information of each preset sensor. The number of preset first arrays can be multiple, corresponding one-to-one with the alarm conditions. Meanwhile, the alarm level corresponding to each alarm condition can be determined, and each alarm level and the corresponding alarm condition are stored in association into the preset second array. Different priorities are marked for different alarm conditions corresponding to the same alarm level within the preset second array, and the judgment rule and the preset alarm threshold corresponding to each data temporary storage bit are configured as the sub-alarm rule, to facilitate the judgment of the target alarm condition.

In an embodiment, the method for determining an alarm level further comprises:
determining current environmental data corresponding to a target alarm level, and outputting the target alarm level and the current environmental data.

In this embodiment, after the target alarm level is determined, the current environmental data corresponding to the target alarm level can be determined, and the target alarm level and the current environmental data are output. This facilitates the user in promptly determining the situation corresponding to the current environmental data, enabling timely detection of a fire and prompt extinguishing of the fire based on the current environmental data corresponding to the target alarm level.

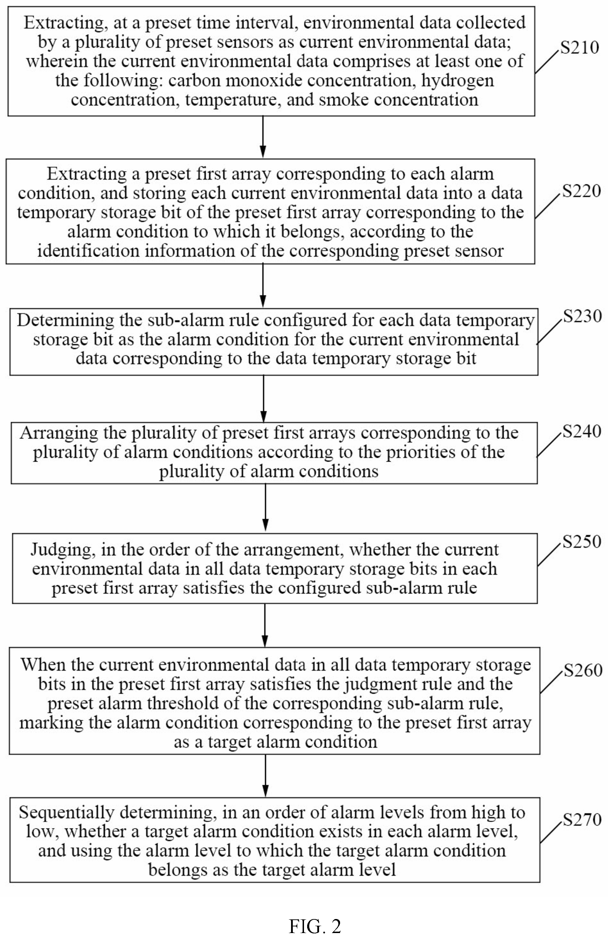

In an embodiment, FIG. 2 is a flowchart of another method for determining an alarm level provided by an embodiment of the present application. This embodiment is an optimization and expansion based on the foregoing embodiment and can be combined with a plurality of optional technical solutions in the foregoing embodiment. As shown in FIG. 2, the method comprises the following steps.

S210: at a preset time interval, environmental data collected by a plurality of preset sensors is extracted as current environmental data; wherein the current environmental data comprises at least one of the following: carbon monoxide concentration, hydrogen concentration, temperature, and smoke concentration.

Wherein, the preset time interval can be a time interval for collecting data from the preset sensors, set according to user requirements. In an actual operation process, the preset time interval can include, but is not limited to, 200 ms, 500 ms, 1 s, etc.

In this embodiment, the environmental data collected by the plurality of preset sensors can be extracted at the preset time interval, and the environmental data collected by the plurality of preset sensors can be used as the current environmental data. Different types of preset sensors can be used for different current environmental data. The preset time interval for extracting the environmental data collected by each preset sensor can be the same or different, which is not limited herein. In an embodiment, the carbon monoxide concentration in the environment can be collected by a preset carbon monoxide concentration sensor at the preset time interval, the hydrogen concentration in the environment can be collected by a preset hydrogen concentration sensor at the preset time interval, the temperature of the current environment can be collected by a preset temperature sensor at the preset time interval, and the smoke concentration in the environment can be collected by a preset smoke concentration sensor at the preset time interval. The carbon monoxide concentration, hydrogen concentration, temperature, and smoke concentration are then used as the current environmental data.

S220: a preset first array corresponding to each alarm condition is extracted, and each current environmental data is stored into a data temporary storage bit of the preset first array corresponding to the alarm condition to which it belongs, according to the identification information of the corresponding preset sensor.

In this embodiment, the preset first array corresponding to each alarm condition can be extracted, and the corresponding current environmental data can be stored in the data temporary storage bit of the preset first array corresponding to the alarm condition to which it belongs, according to the identification information of each preset sensor. Each alarm condition can correspond to one preset first array, and the corresponding current environmental data can be stored into the data temporary storage bit of the preset first array corresponding to the alarm condition to which it belongs, according to the identification information of the preset sensor.

S230: the sub-alarm rule configured for each data temporary storage bit is determined as the alarm condition for the current environmental data corresponding to the data temporary storage bit.

In this embodiment, the sub-alarm rule configured for each data temporary storage bit can be determined, and the sub-alarm rule configured for each data temporary storage bit can be used as the alarm condition.

S240: the plurality of preset first arrays corresponding to the plurality of alarm conditions is arranged according to the priorities of the plurality of alarm conditions.

In this embodiment, since different alarm conditions corresponding to the same alarm level are marked with different priorities in the preset second array, the arrangement order of the corresponding plurality of preset first arrays can be determined according to the priorities of the plurality of alarm conditions, so that the preset first array corresponding to the alarm condition with a higher priority is judged first.

S250: in the order of the arrangement, whether the current environmental data in all data temporary storage bits in each preset first array satisfies the configured sub-alarm rule, is judged.

In this embodiment, the sub-alarm rule corresponding to each data temporary storage bit can be extracted, the judgment rule and the preset alarm threshold of the sub-alarm rule can be determined, and it can be judged in the order of the arrangement whether the current environmental data in all data temporary storage bits in each preset first array satisfies the configured sub-alarm rule. In an actual operation process, the current environmental data corresponding to the data temporary storage bit in each preset first array can be determined in sequence, and it can be judged whether the preset alarm threshold is satisfied according to the configured judgment rule.

S260: when the current environmental data in all data temporary storage bits in the preset first array satisfies the judgment rule and the preset alarm threshold of the corresponding sub-alarm rule, marking the alarm condition corresponding to the preset first array as a target alarm condition.

In this embodiment, when the current environmental data in all data temporary storage bits in the preset first array satisfies the configured sub-alarm rule, the alarm condition corresponding to the preset first array can be marked as the target alarm condition. That is, when the current environmental data in the data temporary storage bits corresponding to the same alarm condition satisfies the judgment rule and the preset alarm rule of the sub-alarm rule, the corresponding alarm condition is determined as the target alarm condition.

S270: in an order of alarm levels from high to low, whether a target alarm condition exists in each alarm level is determined sequentially, and the alarm level to which the target alarm condition belongs is used as the target alarm level.

In the embodiment of the present application, after the target alarm condition is determined, it can be sequentially determined, in the order of alarm levels from high to low, whether each alarm level contains the target alarm condition, and the alarm level in which the target alarm condition exists is used as the target alarm level.

In the embodiment of the present application, by extracting, at a preset time interval, the environmental data collected by the plurality of preset sensors as the current environmental data, extracting the preset first array corresponding to each alarm condition, and storing each current environmental data into the data temporary storage bit of the preset first array corresponding to the alarm condition to which it belongs according to the identification information of the corresponding preset sensor, determining the sub-alarm rule configured for each data temporary storage bit as the alarm condition, arranging the plurality of preset first arrays according to the priorities of the plurality of alarm conditions, judging, in the order of the arrangement, whether the current environmental data in all data temporary storage bits in each preset first array satisfies the configured sub-alarm rule, when the current environmental data in all data temporary storage bits in the preset first array satisfies the judgment rule and the preset alarm threshold of the corresponding sub-alarm rule, marking the alarm condition corresponding to the preset first array as the target alarm condition, and sequentially determining, in the order of alarm levels from high to low, whether a target alarm condition exists in each alarm level, and using the alarm level to which the target alarm condition belongs as the target alarm level, the alarm level is automatically determined according to the priorities of the alarm conditions, the convenience of determining the alarm level is improved, and the user's experience is enhanced.

In an embodiment, this embodiment is a specific implementation based on the foregoing embodiments, taking the number of a preset sensor as an example of the identification information of the preset sensor to describe a method for determining an alarm level, and can be combined with multiple optional technical solutions in the foregoing embodiments.

An alarm condition array, a judgment rule array, and a preset alarm threshold array can be established.

```
sensorID[LevelMax][ConditionMax][SubConditionMax]; // Preset sensor number/ID
moreOrLess[LevelMax][ConditionMax][SubConditionMax]; // 0: >=, 1: <= (judgment rule)
```

ThrValue[LevelMax][ConditionMax][SubConditionMax]; // Preset alarm threshold

Wherein sensorID is sensor number/ID, used for retrieving sensor values (current environmental data);

moreOrLess is used for judging "greater than or equal to" or "less than or equal to";

ThrValue: if the value is judged to be greater than or equal to, or less than or equal to, this value according to moreOrLess, the alarm condition is met;

LevelMax: maximum alarm level;

ConditionMax: the maximum number of sufficient but not necessary conditions for reaching a corresponding alarm level. The conditions are in an "OR" relationship, meaning if any one condition is met, the alarm level is met;

SubConditionMax: necessary but not sufficient conditions for a corresponding Condition. Each Condition is composed of SubConditionMax judgment conditions. If all SubConditions are met, the Condition meets the alarm requirement.

In an embodiment, during configuration, the highest level is set at the beginning, meaning ThrValue[0][0][0] represents the highest alarm level, and the lowest level is set at the end.

In an embodiment, a single alarm judgment, alarmCondition[L][m][n], can be performed first.

To calculate the alarm for alarmCondition[L][m][n]:

If moreOrLess[L][m][n] = 0;

then it is judged whether the sensor value 'value' corresponding to sensorID[L][m][n] is greater than or equal to ThrValue[L][m][n] to trigger an alarm;

If moreOrLess[L][m][n] = 1;

then it is judged whether the sensor value 'value' corresponding to sensorID[L][m][n] is less than or equal to ThrValue[L][m][n] to trigger an alarm.

Then, a composite alarm condition judgment, alarmCondition[L][m][0..n], is performed.

To calculate whether the composite alarm for alarmCondition[L][m][0..n] is established:

First, set subAlarmFlg = 0;

Loop to perform the single alarm condition judgment, where the maximum value of n is SubConditionMax-1;

If the single alarm condition judgment is met subAlarmFlg = subAlarmFlg + $2^n$ ;

After the calculation is complete, when subAlarmFlg = $2^{subAlarmFlg}$ - 1 is got, the alarm condition is determined to be met.

To determine the target alarm level, alarmCondition[L][0..m]:

First, set AlarmFlg = 0;

Loop to perform the composite alarm condition judgment, where the maximum value of m is ConditionMax-1;

If an alarm condition is met AlarmFlg = AlarmFlg + $2^m$;

After the calculation is complete, if AlarmFlg > 0, then the alarm level is met;

$$\text{Determine the target alarm level} = \text{LevelMax - L}.$$

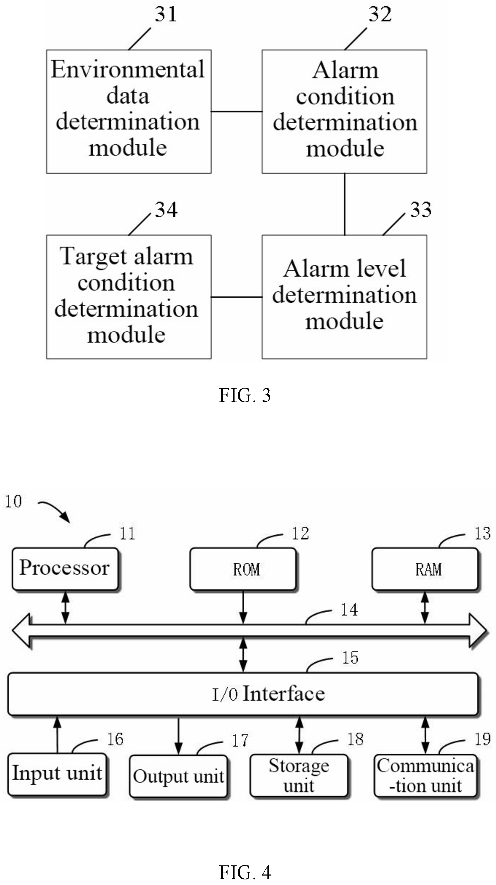

In an embodiment, FIG. 3 is a schematic structural diagram of an alarm level determination device provided by an embodiment of the present application. As shown in FIG. 3, the device comprises: an environmental data determination module 31, an alarm condition determination module 32, a target alarm condition determination module 33, and an alarm level determination module 34.

Wherein, the environmental data determination module 31 is configured to acquire current environmental data collected by a plurality of preset sensors;

the alarm condition determination module 32 is configured to determine, based on respective identification information of the plurality of preset sensors, an alarm condition to which the current environmental data corresponding to each of the preset sensors belongs;

the target alarm condition determination module 33 is configured to determine the alarm condition as a target alarm condition when a current environmental data satisfies a sub-alarm rule of the corresponding alarm condition; and

the alarm level determination module 34 is configured to determine the alarm level to which the target alarm condition belongs as a target alarm level; wherein the alarm level comprises at least one alarm condition.

In the embodiment of the present application, the environmental data determination module acquires current environmental data collected by a plurality of preset sensors, the alarm condition determination module determines, based on respective identification information of the plurality of preset sensors, an alarm condition to which the current environmental data corresponding to each of the preset sensors belongs, the target alarm condition determination module determines the alarm condition as a target alarm condition when a current environmental data satisfies a sub-alarm rule of the corresponding alarm condition, and the alarm level determination module determines the alarm level to which the target alarm condition belongs as a target alarm level, thereby achieving automatic determination of the alarm level. This enables the system to issue early warnings according to different strategies based on the alarm level, reduces false alarms of the system, and allows a user to discover a fire in a timely manner and extinguish it in time when the alarm level is high, thereby minimizing fire damage.

In an embodiment, the alarm level determination device further comprises:

a temporary storage bit setting module configured to determine at least one preset sensor corresponding to each alarm condition according to an alarm requirement, and for each alarm condition, set a data temporary storage bit in a preset first array corresponding to the alarm condition according to the identification information of each preset sensor;

a priority determination module configured to determine an alarm level corresponding to each alarm condition, store the alarm level and the corresponding alarm condition in association into a preset second array, and mark different priorities for different alarm conditions corresponding to the same alarm level within the preset second array; and

a rule configuration module configured to configure a judgment rule and a preset alarm threshold corresponding to each data temporary storage bit as a sub-alarm rule.

In an embodiment, the environmental data determination module 31 comprises:

an environmental data determination unit configured to extract, at a preset time interval, environmental data collected by a plurality of preset sensors as current environmental data; wherein the current environmental data comprises at least one of the following: carbon monoxide concentration, hydrogen concentration, temperature, and smoke concentration.

In an embodiment, the alarm condition determination module 32 comprises:

a data storage unit configured to extract a preset first array corresponding to each alarm condition, and store each current environmental data into a data temporary storage bit of the preset first array corresponding to the alarm condition to which it belongs, according to the identification information of the corresponding preset sensor; and

an alarm condition determination unit configured to determine the sub-alarm rule configured for each data temporary storage bit as the alarm condition for the current environmental data corresponding to each data temporary storage bit.

In an embodiment, the target alarm condition determination module 33 comprises:

an array arrangement unit configured to arrange the plurality of preset first arrays corresponding to the plurality of alarm conditions according to the priorities of the plurality of alarm conditions;

an alarm rule matching unit configured to judge, in the order of the arrangement, whether the current environmental data in all data temporary storage bits in each preset first array satisfies the configured sub-alarm rule; and

an alarm condition marking unit configured to mark the alarm condition corresponding to the preset first array as a target alarm condition when the current environmental data in all data temporary storage bits in the preset first array satisfies the judgment rule and the preset alarm threshold of the corresponding sub-alarm rule.

In an embodiment, the alarm level determination module 34 comprises:

an alarm level determination unit configured to sequentially determine, in an order of alarm levels from high to low, whether a target alarm condition exists in each alarm level, and use the alarm level to which the target alarm condition belongs as the target alarm level.

In an embodiment, the alarm level determination device further comprises:

a data output module configured to determine current environmental data corresponding to the target alarm level, and output the target alarm level and the current environmental data.

The alarm level determination device provided by the embodiment of the present application can execute the alarm level determination method provided by any embodiment of the present application, and has functional modules and effects corresponding to the execution method.

In an embodiment, FIG. 4 is a schematic structural diagram of an electronic device for implementing a method for determining an alarm level according to an embodiment of the present application. The electronic device can be any form of digital computer, such as a laptop computer, a desktop computer, a workstation, a personal digital assistant, a server, a blade server, a mainframe computer, and other suitable computers. The electronic device can also be any form of mobile device, such as a personal digital processor, a cellular phone, a smart phone, a wearable device (e.g., a helmet, glasses, a watch, etc.), and other similar computing devices. The components, their connections and relationships, and their functions shown herein are merely examples and are not intended to limit the implementation of the present application described and/or claimed herein.

As shown in FIG. 4, an electronic device 10 includes at least one processor 11, and a memory communicatively connected to the at least one processor 11, such as a Read-Only Memory (ROM) 12, a Random Access Memory (RAM) 13, and the like. The memory stores a computer program executable by the at least one processor. The processor 11 can perform various appropriate actions and processes according to the computer program stored in the ROM 12 or the computer program loaded from a storage unit 18 into the RAM 13. In the RAM 13, various programs and data required for the operation of the electronic device 10 can also be stored. The processor 11, the ROM 12, and the RAM 13 are connected to each other via a bus 14. An Input/Output (I/O) interface 15 is also connected to the bus 14.

A plurality of components in the electronic device 10 are connected to the I/O interface 15, including: an input unit 16, such as a keyboard, a mouse, etc.; an output unit 17, such as any type of display, speaker, etc.; a storage unit 18, such as a magnetic disk, an optical disk, etc.; and a communication unit 19, such as a network card, a modem, a wireless communication transceiver, and the like. The communication unit 19 allows the electronic device 10 to exchange information/data with other devices through a computer network such as the Internet and/or any telecommunication network.

The processor 11 can be any general-purpose and/or dedicated processing component with processing and computing capabilities. Some examples of the processor 11 include, but are not limited to, a Central Processing Unit (CPU), a Graphic Processing Unit (GPU), various dedicated Artificial Intelligence (AI) computing chips, various processors running machine learning model algorithms, a Digital Signal Processor (DSP), and any appropriate processor, controller, microcontroller, and the like. The processor 11 executes any of the methods and processes described above, such as the method for determining an alarm level.

In some embodiments, the method for determining an alarm level can be implemented as a computer program, which is tangibly embodied in a computer-readable storage medium, such as the storage unit 18. In some embodiments, part or all of the computer program can be loaded and/or installed onto the electronic device 10 via the ROM 12 and/or the communication unit 19. When the computer program is loaded into the RAM 13 and executed by the processor 11, it can execute one or more steps of the method for determining an alarm level described above. Alternatively, in other embodiments, the processor 11 can be configured to execute the method for determining an alarm level by any other suitable means (e.g., by means of firmware).

Any of the embodiments of the systems and techniques described above herein can be implemented in a digital electronic circuit system, an integrated circuit system, a Field Programmable Gate Array (FPGA), an Application Specific Integrated Circuit (ASIC), an Application Specific Standard Product (ASSP), a System on Chip (SOC), a Complex Programmable Logic Device (CPLD), computer hardware, firmware, software, and/or a combination thereof. These embodiments can include: implementation in one or more computer programs that are executable and/or interpretable on a programmable system including at least one programmable processor, which can be a dedicated or general-purpose programmable processor, can receive data and instructions from a storage system, at least one input device, and at least one output device, and can transmit data and instructions to the storage system, the at least one input device, and the at least one output device.

The computer program for implementing the method of the present application can be written using any combination of one or more programming languages. These computer programs can be provided to a processor of a general-purpose computer, a dedicated computer, or other programmable data processing device, such that when the computer program is executed by the processor, the functions/operations specified in the flowcharts and/or block diagrams are implemented. The computer program can be executed entirely on a machine, partially on a machine, as a standalone software package partially on a machine and partially on a remote machine, or entirely on a remote machine or server.

In the context of the present application, a computer-readable storage medium can be a tangible medium that can contain or store a computer program for use by or in connection with an instruction execution system, apparatus, or device. The computer-readable storage medium can include, but is not limited to, an electronic, magnetic, optical, electromagnetic, infrared, or semiconductor system, apparatus, or device, or any suitable combination of the foregoing. Alternatively, the computer-readable storage medium can be a machine-readable signal medium. The machine-readable storage medium can include electrical connections based on one or more wires, a portable computer disk, a hard disk, a Random Access Memory (RAM), a Read-Only Memory (ROM), an Erasable Programmable Read-Only Memory (EPROM) or flash memory, an optical fiber, a Compact Disc Read-Only Memory (CD-ROM), an optical storage device, a magnetic storage device, or any suitable combination of the foregoing.

To provide interaction with a user, the systems and techniques described herein can be implemented on an electronic device having: a display device (e.g., a Cathode Ray Tube (CRT) or a Liquid Crystal Display (LCD) monitor) configured to display information to a user; and a keyboard and a pointing device (e.g., a mouse or a trackball) through which the user can provide input to the electronic device. Other types of devices can also be configured to provide interaction with a user; for example, feedback provided to the user can be any form of sensory feedback (e.g., visual feedback, auditory feedback, or tactile feedback); and input from the user can be received in any form, including acoustic input, speech input, or tactile input.

The systems and techniques described herein can be implemented in a computing system including backend components (e.g., as a data server), or a computing system including middleware components (e.g., an application server), or a computing system including frontend components (e.g., a user computer having a graphical user interface or a web browser through which a user can interact with implementations of the systems and techniques described herein), or a computing system including any combination of such backend, middleware, or frontend components. The components of the system can be interconnected by digital data communication in any form or medium (e.g., a communication network). Examples of communication networks include: a Local Area Network (LAN), a Wide Area Network (WAN), a blockchain network, and the Internet.

A computing system can include clients and servers. A client and a server are generally remote from each other and typically interact through a communication network. The relationship of client and server is created by running computer programs having a client-server relationship on the respective computers. A server can be a cloud server, also known as a cloud computing server or cloud host, which is a host product in a cloud computing service system, designed to solve the defects of difficult management and weak business scalability that exist in traditional physical hosts and Virtual Private Server (VPS) services.

It should be understood that the various forms of processes shown above can be used to reorder, add, or delete steps. For example, the multiple steps recited in the present application can be executed in parallel, sequentially, or in a different order, as long as the desired result of the technical solution of the present application can be achieved, which is not limited herein.

**Claims**

1. A method for determining an alarm level, comprising:

   acquiring current environmental data collected by a plurality of preset sensors;
   determining an alarm condition to which the current environmental data corresponding to each of the plurality of preset sensors belongs based on respective identification information of the plurality of preset sensors;
   determining the alarm condition as a target alarm condition in response to a current environmental data satisfying a sub-alarm rule of the corresponding alarm condition;
   and determining the alarm level to which the target alarm condition belongs as a target alarm level, wherein the alarm level comprises at least one alarm condition.

2. The method according to claim 1, further comprising, before acquiring the current environmental data collected by the plurality of preset sensors,

   determining at least one preset sensor corresponding to each alarm condition according to an alarm requirement, setting a data temporary storage bit in a preset first array corresponding to the alarm condition according to identification information of each preset sensor for each alarm condition;
   determining an alarm level corresponding to each alarm condition, storing each alarm level and the corresponding alarm condition in association in a preset second array, marking different priorities for different alarm conditions corresponding to the same alarm level in the preset second array;
   and configuring a judgment rule and a preset alarm threshold corresponding to each data temporary storage bit as the sub-alarm rule.

3. The method according to claim 1, wherein acquiring the current environmental data collected by the plurality of preset sensors comprises:
   extracting environmental data collected by the plurality of preset sensors at a preset time interval as the current environmental data, wherein the current environmental data comprises at least one of carbon monoxide concentration, hydrogen concentration, temperature, and smoke concentration.

4. The method according to claim 2, wherein determining the alarm condition to which the current environmental data corresponding to each of the plurality of preset sensors belongs based on respective identification information of the plurality of preset sensors, comprises;

extracting a preset first array corresponding to each alarm condition, storing each current environmental data into a data temporary storage bit of the preset first array corresponding to the alarm condition to which the current environmental data belongs according to identification information of the corresponding preset sensor; and determining a sub-alarm rule configured for each data temporary storage bit as the alarm condition for the current environmental data corresponding to each data temporary storage bit.

5. The method according to claim 2, wherein determining the alarm condition as the target alarm condition in response to the current environmental data satisfying the sub-alarm rule of the corresponding alarm condition, comprises:

arranging a plurality of preset first arrays corresponding to the plurality of alarm conditions according to priorities of the plurality of alarm conditions; judging whether all current environmental data in all data temporary storage bits in each preset first array satisfy the corresponding configured sub-alarm rule in the arranged order; and marking the alarm condition corresponding to the preset first array as the target alarm condition in response to all current environmental data in all data temporary storage bits in the preset first array satisfying the judgment rule of the corresponding sub-alarm rule and the preset alarm threshold.

6. The method according to claim 1, wherein determining the alarm level to which the target alarm condition belongs as the target alarm level, comprises: sequentially determining whether the target alarm condition exists in each alarm level based on an order of alarm levels from high to low, and taking the alarm level to which the target alarm condition belongs as the target alarm level.

7. The method according to claim 1, further comprising: determining current environmental data corresponding to the target alarm level, and outputting the target alarm level and the current environmental data.

8. An apparatus for determining an alarm level, comprising:

an environmental data determination module configured to acquire current environmental data collected by a plurality of preset sensors; an alarm condition determination module configured to determine an alarm condition to which the current environmental data corresponding to each of the plurality of preset sensors belongs based on respective identification information of the plurality of preset sensors; an alarm condition determination module configured to determine the alarm condition as a target alarm condition in response to a current environmental data satisfying a sub-alarm rule of the corresponding alarm condition; and an alarm level determination module configured to determine the alarm level to which the target alarm condition belongs as a target alarm level, wherein the alarm level comprises at least one alarm condition.

9. An electronic device, comprising:

at least one processor, and a memory connected communicatively to the at least one processor, wherein the memory stores a computer program executable by the at least one processor, and the computer program is executed by the at least one processor to enable the at least one processor to perform the method for determining an alarm level according to any one of claims 1 to 7.

10. The computer-readable storage medium, wherein the computer-readable storage medium stores computer instructions, and the computer instructions are configured to enable a processor to implement the method for determining an alarm level according to any one of claims 1 to 7 when executed by the processor.

Acquire current environmental data collected by a plurality of preset sensors — S110

Determine, based on respective identification information of the plurality of preset sensors, an alarm condition to which the current environmental data corresponding to each of the preset sensors belongs — S120

When a current environmental data satisfies a sub-alarm rule of the corresponding alarm condition, determine the alarm condition as a target alarm condition — S130

Determine the alarm level to which the target alarm condition belongs as a target alarm level; wherein the alarm level comprises at least one alarm condition — S140

FIG. 1

Extracting, at a preset time interval, environmental data collected by a plurality of preset sensors as current environmental data; wherein the current environmental data comprises at least one of the following: carbon monoxide concentration, hydrogen concentration, temperature, and smoke concentration — S210

Extracting a preset first array corresponding to each alarm condition, and storing each current environmental data into a data temporary storage bit of the preset first array corresponding to the alarm condition to which it belongs, according to the identification information of the corresponding preset sensor — S220

Determining the sub-alarm rule configured for each data temporary storage bit as the alarm condition for the current environmental data corresponding to the data temporary storage bit — S230

Arranging the plurality of preset first arrays corresponding to the plurality of alarm conditions according to the priorities of the plurality of alarm conditions — S240

Judging, in the order of the arrangement, whether the current environmental data in all data temporary storage bits in each preset first array satisfies the configured sub-alarm rule — S250

When the current environmental data in all data temporary storage bits in the preset first array satisfies the judgment rule and the preset alarm threshold of the corresponding sub-alarm rule, marking the alarm condition corresponding to the preset first array as a target alarm condition — S260

Sequentially determining, in an order of alarm levels from high to low, whether a target alarm condition exists in each alarm level, and using the alarm level to which the target alarm condition belongs as the target alarm level — S270

FIG. 2

FIG. 3

FIG. 4

## INTERNATIONAL SEARCH REPORT

International application No.

**PCT/CN2024/119131**

### A. CLASSIFICATION OF SUBJECT MATTER

G08B 21/18(2006.01)i

According to International Patent Classification (IPC) or to both national classification and IPC

### B. FIELDS SEARCHED

Minimum documentation searched (classification system followed by classification symbols)

IPC: G08B, G01D, G06

Documentation searched other than minimum documentation to the extent that such documents are included in the fields searched

Electronic data base consulted during the international search (name of data base and, where practicable, search terms used)

VEN, CNABS, CNTXT, CNKI: 报警, 警, 等级, 分级, 分层, 级别, 优先级, 环境, 温度, 浓度, 烟雾, 传感器, 锂电, 电池, 条件, 规则, 阈值, 存储, 贮存, 暂存, 数组, 队列, 结构体, 数据结构, 标识, ID, 识别, abnormal, alarm, grade, class+, level, stratificat +, priority, environment, temperature, concentration, smoke, smog, sensor, lithium power, battery, condition, rule, threshold, stor+, array, queue, struct, data struct, identifi+

### C. DOCUMENTS CONSIDERED TO BE RELEVANT

| Category* | Citation of document, with indication, where appropriate, of the relevant passages | Relevant to claim No. |
|---|---|---|
| PX | CN 117198017 A (ZEPHYR-INTELLIGENT SYSTEMS (SHANGHAI) CO., LTD.) 08 December 2023 (2023-12-08)<br>claims 1-10 | 1-10 |
| X | CN 112771551 A (FEDEX CORPORATE SERVICES, INC.) 07 May 2021 (2021-05-07)<br>description, paragraphs 3-672, and figures 27-29 | 1, 3, 6-10 |
| Y | CN 112771551 A (FEDEX CORPORATE SERVICES, INC.) 07 May 2021 (2021-05-07)<br>description, paragraphs 3-672, and figures 27-29 | 2, 4-5, 9-10 |
| Y | CN 116743879 A (STATE GRID HEBEI ELECTRIC POWER SUPPLY CO., LTD. ELECTRIC POWER RESEARCH INSTITUTE et al.) 12 September 2023 (2023-09-12)<br>description, paragraphs 5-89, and figures 1-6 | 2, 4-5, 9-10 |
| X | CN 109767599 A (BEIJING LONGPU INTELLIGENT TECHNOLOGY CO., LTD.) 17 May 2019 (2019-05-17)<br>description, paragraphs 24-70, and figures 1-3 | 1, 3, 6-10 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 December 2024** | **23 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

EP 4 787 350 A1

**INTERNATIONAL SEARCH REPORT**

| International application No. |
| --- |
| **PCT/CN2024/119131** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 115668323 A (QUALCOMM INC.) 31 January 2023 (2023-01-31) <br> entire document | 1-10 |
| A | WO 2023016065 A1 (CONTEMPORARY AMPEREX TECHNOLOGY CO., LTD.) 16 February 2023 (2023-02-16) <br> entire document | 1-10 |

Form PCT/ISA/210 (second sheet) (July 2022)

16

## INTERNATIONAL SEARCH REPORT
### Information on patent family members

International application No.

**PCT/CN2024/119131**

| Patent document cited in search report | | | Publication date (day/month/year) | Patent family member(s) | | | Publication date (day/month/year) |
|---|---|---|---|---|---|---|---|
| CN | 117198017 | A | 08 December 2023 | None | | | |
| CN | 112771551 | A | 07 May 2021 | US | 2020098245 | A1 | 26 March 2020 |
| | | | | US | 11159622 | B2 | 26 October 2021 |
| | | | | US | 2020097904 | A1 | 26 March 2020 |
| | | | | US | 11134123 | B2 | 28 September 2021 |
| | | | | CA | 3106044 | A1 | 26 March 2020 |
| | | | | US | 2020095059 | A1 | 26 March 2020 |
| | | | | US | 11729271 | B2 | 15 August 2023 |
| | | | | ES | 2956819 | T3 | 28 December 2023 |
| | | | | US | 2020098241 | A1 | 26 March 2020 |
| | | | | US | 11025720 | B2 | 01 June 2021 |
| | | | | EP | 3815004 | A1 | 05 May 2021 |
| | | | | EP | 3815004 | A4 | 23 March 2022 |
| | | | | EP | 3815004 | B1 | 19 July 2023 |
| | | | | US | 2020098238 | A1 | 26 March 2020 |
| | | | | US | 10769920 | B2 | 08 September 2020 |
| | | | | US | 2020098240 | A1 | 26 March 2020 |
| | | | | US | 11075994 | B2 | 27 July 2021 |
| | | | | US | 2020094091 | A1 | 26 March 2020 |
| | | | | US | 10639509 | B2 | 05 May 2020 |
| | | | | US | 2021014311 | A1 | 14 January 2021 |
| | | | | US | 11122126 | B2 | 14 September 2021 |
| | | | | EP | 4332861 | A2 | 06 March 2024 |
| | | | | EP | 4332861 | A3 | 01 May 2024 |
| | | | | US | 2020143664 | A1 | 07 May 2020 |
| | | | | US | 10755552 | B2 | 25 August 2020 |
| | | | | JP | 2023036637 | A | 14 March 2023 |
| | | | | JP | 7493017 | B2 | 30 May 2024 |
| | | | | US | 2022182450 | A1 | 09 June 2022 |
| | | | | US | 2023208918 | A1 | 29 June 2023 |
| | | | | US | 11924278 | B2 | 05 March 2024 |
| | | | | US | 2021058462 | A1 | 25 February 2021 |
| | | | | US | 11431803 | B2 | 30 August 2022 |
| | | | | US | 2022078239 | A1 | 10 March 2022 |
| | | | | US | 11659039 | B2 | 23 May 2023 |
| | | | | WO | 2020060810 | A1 | 26 March 2020 |
| | | | | WO | 2020060810 | A8 | 14 May 2020 |
| | | | | US | 2020100115 | A1 | 26 March 2020 |
| | | | | US | 11184442 | B2 | 23 November 2021 |
| | | | | US | 2022078240 | A1 | 10 March 2022 |
| | | | | US | 11838366 | B2 | 05 December 2023 |
| | | | | US | 2020098234 | A1 | 26 March 2020 |
| | | | | US | 11223682 | B2 | 11 January 2022 |
| | | | | US | 2020265696 | A1 | 20 August 2020 |
| | | | | US | 11095719 | B2 | 17 August 2021 |
| | | | | US | 2022086229 | A1 | 17 March 2022 |
| | | | | US | 11824936 | B2 | 21 November 2023 |
| | | | | US | 2020100077 | A1 | 26 March 2020 |
| | | | | US | 10891842 | B2 | 12 January 2021 |
| | | | | US | 2022086228 | A1 | 17 March 2022 |

Form PCT/ISA/210 (patent family annex) (July 2022)

| Patent document<br>cited in search report | | | Publication date<br>(day/month/year) | Patent family member(s) | | | Publication date<br>(day/month/year) |
|---|---|---|---|---|---|---|---|
| | | | | US | 11778029 | B2 | 03 October 2023 |
| | | | | US | 2022086227 | A1 | 17 March 2022 |
| | | | | US | 11601502 | B2 | 07 March 2023 |
| | | | | US | 2020100076 | A1 | 26 March 2020 |
| | | | | US | 10878681 | B2 | 29 December 2020 |
| | | | | US | 2020372776 | A1 | 26 November 2020 |
| | | | | US | 11178228 | B2 | 16 November 2021 |
| | | | | US | 2020094092 | A1 | 26 March 2020 |
| | | | | US | 10909829 | B2 | 02 February 2021 |
| | | | | US | 2020410834 | A1 | 31 December 2020 |
| | | | | US | 11184443 | B2 | 23 November 2021 |
| | | | | US | 2020099237 | A1 | 26 March 2020 |
| | | | | US | 10896588 | B2 | 19 January 2021 |
| | | | | US | 2020095062 | A1 | 26 March 2020 |
| | | | | US | 10896587 | B2 | 19 January 2021 |
| | | | | US | 2024056501 | A1 | 15 February 2024 |
| | | | | US | 2020098242 | A1 | 26 March 2020 |
| | | | | US | 10854061 | B2 | 01 December 2020 |
| | | | | US | 2020095061 | A1 | 26 March 2020 |
| | | | | US | 11283875 | B2 | 22 March 2022 |
| | | | | US | 2020097786 | A1 | 26 March 2020 |
| | | | | US | 11095718 | B2 | 17 August 2021 |
| | | | | US | 2020098239 | A1 | 26 March 2020 |
| | | | | US | 10777058 | B2 | 15 September 2020 |
| | | | | JP | 2022500781 | A | 04 January 2022 |
| | | | | JP | 7192105 | B2 | 19 December 2022 |
| | | | | US | 2020098243 | A1 | 26 March 2020 |
| | | | | US | 11019148 | B2 | 25 May 2021 |
| CN | 116743879 | A | 12 September 2023 | None | | | |
| CN | 109767599 | A | 17 May 2019 | None | | | |
| CN | 115668323 | A | 31 January 2023 | BR | 112022022823 | A2 | 13 December 2022 |
| | | | | EP | 4154233 | A1 | 29 March 2023 |
| | | | | KR | 20230011940 | A | 25 January 2023 |
| | | | | WO | 2021236986 | A1 | 25 November 2021 |
| WO | 2023016065 | A1 | 16 February 2023 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311282879